Europäisches Patentamt

European Patent Office

Office européen des brevets

(11) Veröffentlichungsnummer: **0 266 483**
**A2**

(12) # EUROPÄISCHE PATENTANMELDUNG

(21) Anmeldenummer: **87106733.6**

(22) Anmeldetag: **08.05.87**

(51) Int. Cl.⁴: **F24F 3/16** , **C25B 1/00** ,
**B60H 3/06**

(30) Priorität: **07.11.86 DE 3638052**

(43) Veröffentlichungstag der Anmeldung:
**11.05.88 Patentblatt 88/19**

(84) Benannte Vertragsstaaten:
**CH DE FR IT LI**

(71) Anmelder: **Licentia Patent-Verwaltungs-GmbH**
**Theodor-Stern-Kai 1**
**D-6000 Frankfurt/Main 70(DE)**

(72) Erfinder: **Schaper, Wolfgang, Dr.**
**Feldbergstrasse 8**
**D-6056 Heusenstamm(DE)**
Erfinder: **Fleischmann, Robert, Dr.**
**Danziger Strasse 1**
**D-8752 Laufach(DE)**
Erfinder: **Böhm, Harald, Dr.**
**Auf der Platt 38**
**D-6246 Glashütten/Ts.(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) **Verfahren und Vorrichtung zur Konditionierung von Luft.**

(57) Verfahren und Vorrichtung zur Konditionierung von Luft.

Die Verwendung von Filtern zur Entfernung von Geruchs-und Schadstoffen aus der Luft erfordert, wenn eine effektive Reinigungswirkung erzielt werden soll, ein häufiges Auswechseln der Filter. Dies entspricht nicht den Anforderungen an einen wirtschaftlichen Dauerbetrieb.

Die Konditionierung von Luft kann mit hohen Wirkungsgrad, in einen wirtschaftlichen Dauerbetrieb dadurch bewirkt werden, daß die anodisch umsetzbaren Stoffe der Luft in einer elektrochemischen Zelle oxidiert werden.

FIG.1

EP 0 266 483 A2

## Verfahren und Vorrichtung zur Konditionierung der Luft

Die Erfindung betrifft ein Verfahren und eine Vorrichtung zur Konditionierung der Luft. Es geht dabei vor allem um die Verbesserung der Atemluft, insbesondere der Luft von Räumen, in den sich Menschen aufhalten. Diese Konditionierung der Raumluft ist seit langem ein Anliegen. Bis heute war es jedoch nicht möglich eine befriedigende Lösung zu finden. Zur Raumluftverbesserung dient meistens der Luftersatz mit Außenluft (Lüften). Dabei geht jeweils Heizenergie verloren. Außerdem ist eine solche Luftverbesserung nicht möglich, wenn die Außenluft schlechter ist als die Innenluft (z. B. PKW in einem Stau). Die käuflichen Geräte zur Luftverbesserung führen meist nur eine Luftbefeuchtung durch.

Bekannt sind auch mit Absorptionsmittel versehene Filter, die Geruchs-und Schadstoffe sorbieren sollen. So basieren beispielsweise die Dunstabzugshauben der Hausgerätehersteller auf dem Sorptionsprinzip, wobei als Absorbens meist Aktivkohle verwendet wird. Auch Gasmasken absorbieren den Giftstoff mittels eines Aktivkohlefilters.

Die Bemühungen der Fachwelt beschränkten sich bisher darauf, das Filtermaterial zu verbessern, um die Effektivität des Sorptionsvorgangs zu erhöhen. So ist es beispielsweise aus dem Fraunhofer Gesellschafts-Bericht 1985, Heft 3/4, Seite 42 bis 45, bekannt, die Geruchsfilter für die Pkw-Zuluftfiltration mit einem Spezial-Absorber, eingebettet in Polyurethanschaum, auszustatten.

Die Luftverbesserung mittels Filter weist jedoch trotz Verbesserung des Filtermaterials erhebliche Nachteile auf:

Mit einer vertretbaren Größe des Filtervolumens läßt sich nur eine unzureichende Luftreinigung erzielen. Die Filter müssen relativ oft ausgewechselt werden, oder eine Absorption findet bei längerem Betrieb nur bei hohen Schad-und Geruchsstoffkonzentrationen statt, wobei dann, wenn die Schad-und Geruchsstoffkonzentration niedrig ist, eine Desorption eintritt, d. h. daß die vorher absorbierten Stoffe wieder an die Luft abgegeben werden.

Das Auswechseln der Filter nach relativ kurzen Betriebszeiten ist unwirtschaftlich und widerspricht dem Einsatz im Dauerbetrieb bei der Raumluftkonditionierung. Die Desorption von Schad-und Geruchsstoffen führt nicht zur Verminderung der Dauerbelastung, da nur ein gleichmäßigeres Verteilen der unerwünschten Luftbestandteile erreicht wird.

Der Erfindung liegt die Aufgabe zugrunde, ein Verfahren und eine Vorrichtung zur Konditionierung von Luft, insbesondere der Atemluft, verfügbar zu machen, das bei hohem Wirkungsgrad und wirtschaftlich im Dauerbetrieb einsetzbar ist.

Die Aufgabe wird erfindungsgemäß für das Verfahren dadurch gelöst, daß die anodisch umsetzbaren Stoffe in einer elektrochemischen Zelle oxidiert werden.

Der Erfindung liegt die Erkenntnis zugrunde, daß es sich bei den Schad-und Geruchsstoffen der Atemluft um reaktive Stoffe handelt, die dadurch aus der Luft entfernt werden können, daß sie elektrochemisch oxidiert werden. Bei den Schad-und Geruchsstoffen handelt es sich um reaktive organische Moleküle wie Aldehyde, Ketone, Moleküle mit Carboxylgruppen oder SH-Gruppen sowie anorganische reaktive Stoffe wie Schwefelwasser stoff, Stickoxide, Kohlenmonoxid usw. Die Umwandlung dieser Stoffe durch Oxidation läuft im weitestgehenden Fall bei organischen Molekülen bis zur Bildung von Kohlendioxid, bei Schwefelwasserstoff zur Bildung von Schwefel oder Sulfat, bei Sickoxiden zu Nitrat und bei Kohlenmonoxid ebenfalls zur Bildung von Kohlendioxid.

Die Umwandlung dieser Stoffe in einer elektrochemischen Zelle ist ein Redoxvorgang, wobei der Oxidation an der Anode oder Oxidationselektrode eine Gegenreaktion an der Kathode oder Gegenelektrode gegenübersteht, bei der entweder Wasserstoff entwickelt oder Sauerstoff reduziert wird. Solche elektrochemischen Zellen sind aus der elektrochemischen Gasanalyse bekannt und beispielsweise in "Elektrochemisches Messen", 50. Jahrgang 1983, Heft 11, Seiten 399 bis 406, beschrieben, wobei für die Luftkonditionierung nur die elektrochemischen Grundlagen übertragbar sind; das Verfahren und die Ausgestaltung der Zelle sind entsprechend den Erfordernissen der Luftkonditionierung auszubilden, also dem Durchsatz großer Luftmengen im Dauerbetrieb und der möglichst vollständigen Oxidation der unerwünschten Stoffe.

Die Vorteile der erfindungsgemäßen Verfahrens gegenüber dem Einsatz von Luftfiltern besteht darin, daß eine Geruchs-und Schadstoffbeseitigung über einen langen Zeitraum erreicht werden kann, ohne daß eine ständige Wartung erforderlich wäre. Die Effektivität der Luftreinigung ist wesentlich größer, und das Volumen einer elektrochemischen Zelle ist geringer wie das Volumen des Absorptionsmaterials von Filtern. Die elektrochemische Luftreinigung ist gegenüber Filtern deshalb wirtschaftlicher, weil das Filtermaterial, wenn keine Desorption auftreten soll - also eine effektive Luftreinigung das Ziel ist -, sehr oft ausgewechselt werden muß. Besonders günstig ist eine Anwendung bei Fahrzeugen, z. B. Kraftfahrzeugen oder Eisenbahnfahrzeugen oder auch Flugzeugen.

Vorteilhafte Ausgestaltungen und Weiterbildungen des Verfahrens sind den Unteransprüchen 2 bis 16 zu entnehmen.

Die anodische Oxidation reaktiver Stoffe, wobei es auf die Erfassung von Schad-und Geruchsstoffen ankommt, kann zur Reinigung der Luft von Räumen dienen, in denen sich Menschen aufhalten. Denkbar ist jedoch auch die Reinigung verschmutzter Zuluft, beispielsweise für einen Pkw.

Besonders wichtig für die Durchführung des Verfahrens ist ein hoher Wirkungsgrad. Eine große Reinigungswirkung für die Luft eines Raumes kann einmal dadurch erreicht werden, daß die Zelle in einem bestimmten Zeitraum eine möglichst große Menge Luft umwälzt, zum anderen ist jedoch zur Erzielung eines hohen Wirkungsgrades erforderlich, daß die umgewälzte Luft möglichst vollständig von Geruchs-und Schadstoffen gereinigt wird. Dies ist zu erreichen, wenn die Verweilzeit der verschmutzten Luft an der Oxidationselektrode sowie die Größe der Kontaktfläche zwischen Luft und Elektrode durch konstruktive Maßnahmen so eingestellt wird, daß eine elektrochemische Reaktion möglichst aller Schad-und Geruchsstoffe der Luft stattfindet.

Bei einer anderen Ausgestaltung des Verfahrens wird die zu reinigende Luft durch den Elektrolyten geleitet. Die Geruchs-und Schadstoffe werden in dem Elektrolyten gelöst und der Elektrolyt wird dann der Oxidationselektrode zugeführt, an welcher die Geruchs-und Schadstoffe umgewandelt werden. Bei dieser Ausgestaltung des Verfahrens muß die Verweilzeit der verunreinigten Luft im Elektrolyten sowie das Ausmaß des Oberflächenkontaktes zwischen Luftbläschen und Elektrolyt so eingestellt werden, daß es zu einer möglichst vollständigen Lösung der Geruchs-und Schadstoffe in dem Elektrolyten kommt.

Zur Bewirkung einer vollständigen Oxidation der Schad-und Geruchsstoffe ist es weiterhin erforderlich, daß die Oxidationselektrode mindestens auf einem Potential von 1,2 Volt gegen eine Wasserstoffelektrode in gleicher Lösung liegt.

Eine zweckmäßige Weiterbildung des Verfahrens legt die Oxidationselektrode auf ein Potential von mindestens 1,5 Volt gegen eine Wasserstoffelektrode in gleicher Lösung. Dadurch wird an der Oxidationselektrode neben der Oxidation der Schad-und Geruchsstoffe eine zusätzliche Sauerstoffentwicklung bewirkt, was den Vorteil hat, daß die Atemluft zusätzlich zu der Reinigung mit Sauerstoff angereichert wird. Dieser Effekt läßt sich noch verbessern. Liegt die Gegenelektrode auf einem Potential von ca. - 0,1 Volt gegen eine Wasserstoffelektrode in gleicher Lösung, so tritt dort als Gegenreaktion zur Oxidation eine Wasserstoffentwicklung ein. Liegt die Gegenelektrode jedoch auf einem Potential von ca. · 0,6 Volt, so ist die Gegenreaktion zur Oxidation die Sauerstoffreduktion. Neben dem Vorteil, daß an die Zelle keine so hohe Spannung anzulegen ist, wird auf diese Weise der Effekt einer Sauerstoffpumpe erzielt. Dazu ist der Gegenelektrode Außenluft zuzuführen, die dort reduziert wird, und die Oxidationselektrode ist zur Sauerstoffentwicklung auf das oben genannte Potential zu legen. Diese Ausgestaltung mit dem Sauerstoffpumpeneffekt ist deshalb besonders vorteilhaft, weil die Raumluft durch Schad-und Geruchsstoffbeseitigung mit Sauerstoffanreicherung und noch hinzuzufügender Befeuchtung völlig konditioniert werden kann, ohne daß das bezüglich der Heizkosten unwirtschaftliche Lüften noch eingesetzt zu werden braucht.

Das Verfahren läßt sich - je nachdem, welche chemische Vorgänge neben der Oxidation der Schad-und Geruchsstoffe gewünscht sind - in vier verschiedenen Zellspannungsbereichen betreiben:

1. Die Oxidationselektrode liegt auf 1,2 Volt und die Gegenelektrode auf - 0,1 Volt gegen eine Wasserstoffelektrode in gleicher Lösung. Es findet die Oxidation von Geruchs-und Schadstoffen an der Oxidationselektrode und die Wasserstoffentwicklung an der Gegenelektrode statt.

2. Die Oxidationselektrode liegt auf 1,5 Volt und die Gegenelektrode auf - 0,1 Volt gegen eine Wasserstoffelektrode in gleicher Lösung. Es findet die Oxidation von Geruchs-und Schadstoffen und Sauerstoffentwicklung an der Oxidationselektrode und die Wasserstoffentwicklung an der Gegenelektrode statt.

3. Die Oxidationselektrode liegt auf 1,2 Volt und die Gegenelektrode auf 0,6 Volt gegen eine Wasserstoffelektrode in gleicher Lösung. Es findet die Oxidation von Geruchs-und Schadstoffen an der Oxidationselektrode und die Sauerstoffreduktion an der Gegenelektrode statt. Diese Ausgestaltung hat den Vorteil, daß eine Zellspannung von nur 0,6 bis 0,7 Volt ausreicht.

4. Die Oxidationselektrode liegt auf 1,5 Volt und die Gegenelektrode auf 0,6 Volt gegen eine Wasserstoffelektrode in gleicher Lösung. Es findet die Oxidation von Geruchs-und Schadstoffen und die Sauerstoffentwicklung an der Oxidationselektrode und die Sauerstoffreduktion an der Gegenelektrode statt. Diese Ausgestaltung hat den Vorteil, daß sie zusätzlich als Sauerstoffpumpe die gereinigte Luft mit Sauerstoff an reichert, den sie bei Kontakt der Gegenelektrode mit der Außenluft dieser entzieht.

Diese Angaben beziehen sich auf eine optimale Ausgestaltung, wobei sich je nach Elektrodenmaterial die Werte etwas verschieben können. So kann die Gegenelektrode für Sauerstoffreduktion zwischen 0,4 Volt und 0,8 Volt und für Wasserstoffentwicklung zwischen - 0,1 Volt und - 0,4 Volt gegen eine Wasserstoffelektrode in gleicher Lösung liegen. Entsprechend ändert sich dann auch die Zellspannung.

Das Verfahren wird zweckmäßigerweise so ausgestaltet, daß die verunreinigte Luft durch eine partiell hydrophobe Festbettelektrode geleitet wird, wodurch erreicht wird, daß sich feine Bläschen bilden, die in der Elektrode langsam nach oben steigen. Auf diese Weise läßt sich die Verweilzeit und ein großer Flächenkontakt zwischen Luft und Elektrode einstellen. Es wird erreicht, daß der größte Teil der Schad-und Geruchsstoffmoleküle mit dem Elektrolyten und der Elektrode in Kontakt kommt und dadurch elektrochemisch umgesetzt wird.

Die aus "Elektrisches Messen", 50. Jahrgang 1983, Heft 11, Seiten 399 bis 406, bekannte elektrochemische Zelle wurde zur Ausbildung einer Vorrichtung zur Durchführung des erfindungsgemäßen Verfahrens abgewandelt und weitergebildet. Diese Abwandlungen und Weiterbildungen sind den Unteransprüchen 17 bis 32 zu entnehmen.

Die Erfindung wird im folgenden anhand von in einer Zeichnung dargestellten Ausführungsbeispielen näher beschrieben, aus denen sich weitere Einzelheiten, Merkmale sowie Vorteile ergeben.

Es zeigen schematisch

Fig. 1 Eine erste Ausführungsform, bei der die verunreinigte Luft im Oxidationselektrodenraum umgesetzt wird,

Fig. 2 eine zweite Ausführungsform, bei der die Geruchs-und Schadstoffe im Elektrolyten gelöst werden,

Fig. 3 eine dritte Ausführungsform, bei der der Elektrolyt durch die beiden Elektrodenräume zirkuliert und

Fig. 4 eine vierte Ausführungsform der elektrochemischen Zelle, die in die Außenwand eines Raumes eingesetzt ist.

Bei allen Ausführungsbeispielen ist ein Gehäuse mit einem Elektrolyten gefüllt, mit dem die Anode oder Oxidationselektrode 1 und die Kathode oder Gegenelektrode 2 in Kontakt stehen. Am Boden der Gehäuse befindet sich eine Einlaßöffnung 3, durch die die verunreinigte Luft in die Zelle eintritt bzw. hineingeblasen wird, und eine Auslaßöffnung 2, durch die die gereinigte Luft die Zelle wieder verläßt. Ein Diaphragma 5 verhindert einen Durchtritt von Gasen von einem Elektrodenraum in den anderen.

In den Zellen befindet sich der Elektrolyt, der durch das Diaphragma 5 hindurchtritt und die gesamten aktiven Oberflächen beider Elektroden benetzt. Als Elektrolyt kann eine Säure, z. B. Phosphorsäure oder eine Lauge, z. B. Kalilauge oder ein Carbonat/Bicarbonat-Gleichgewichtselektrolyt, verwendet werden. Ein solcher Gleichgewichtselektrolyt hat den Vorteil, daß er mit dem Kohlendioxid der Luft im Gleichgewicht steht und sich daher nicht durch Kohlendioxidanreicherung verbraucht.

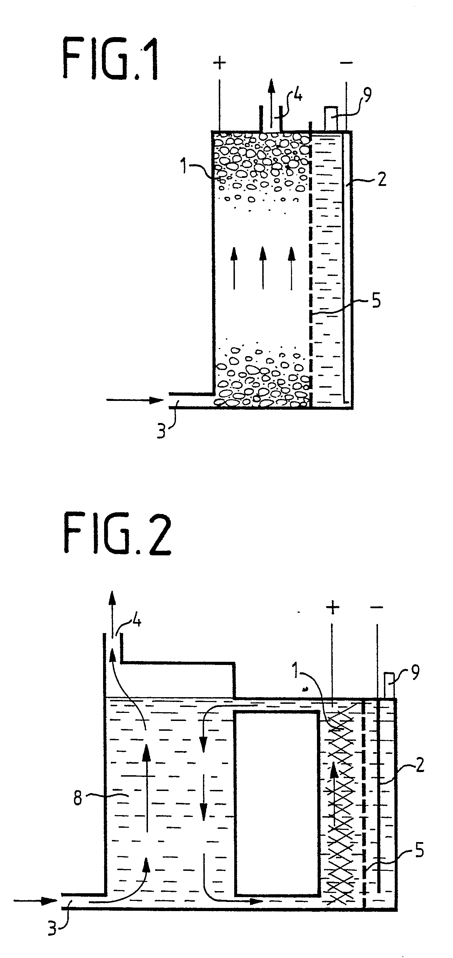

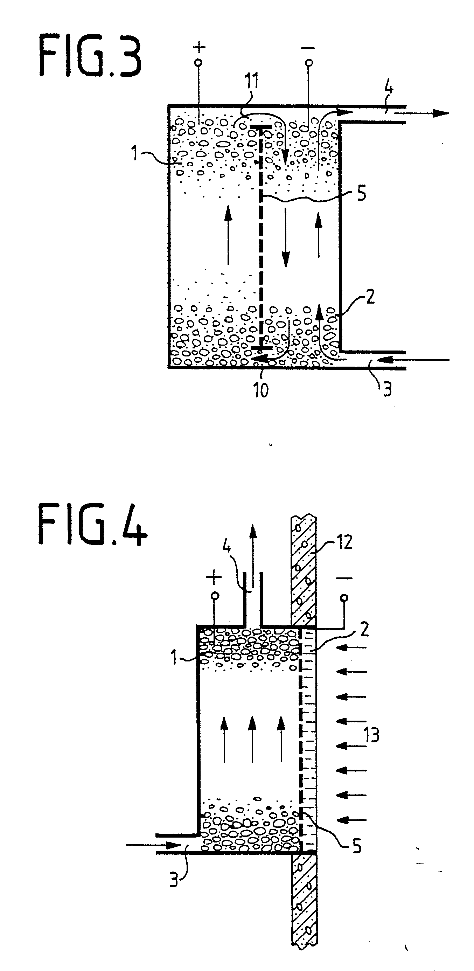

Bei den in Fig. 1 und 4 dargestellten Ausführungsformen ist die Oxidationselektrode 1, bei der Ausführungsform gemäß Fig. 3 auch die Gegenelektrode 2 als partiell hydrophobe Festbettelektrode aufgebaut. Sie besteht aus einer Schüttung von porösen, leitfähigen Partikeln, die zum Beispiel durch Pressung in einem so engen Kontakt zueinander stehen, daß zwischen ihnen eine sehr gute Leitfähigkeit gegeben ist. Dies ist für die Potentialeinstellung über das gesamte Elektrodenvolumen wesentlich. Als Material für die Partikel kommen Graphit, Hartkohle, Aktivkohle, Nickelschwamm, leitfähige Oxide usw. in Frage. Die zu reinigende Luft wird von unten in die Oxidationselektrode 1 (Fig. 1 und 4) oder in die Gegenelektrode (Fig. 3) eingeblasen, wobei die verunreinigte Luft über die ganze Festbettelektrode verteilt wird und sich in sehr feinen Bläschen nach oben bewegt, wodurch sich in der porösen Schüttung ein inniges Luft/Elektrolytgemisch bildet, das mit der Elektrode in einen großflächigen Kontakt tritt.

Die einzelnen Ausführungsformen haben folgende Besonderheiten:

Die in Fig. 1 dargestellte erste Ausführungsform hat eine als Festbettelektrode ausgebildete Oxidationselektrode 1, die auf einem Potential von mindestens 1,2 Volt gegen eine Wasserstoffelektrode in gleicher Lösung liegt. Dadurch, daß die verunreinigte Luft in der oben beschriebenen Weise diese Elektrode durchströmt, findet die Oxidation der Schad-und Geruchsstoffe und damit die Reinigung der Luft statt, die die Zelle durch die Auslaßöffnung 4 wieder verläßt. Durch das Diaphragma 5 ist dieser Raum der Oxidationselektrode gasdicht, aber elektrolytdurchlässig gegen den Raum der Gegenelektrode 2 abgeschirmt. Diese liegt auf einem Potential von - 0,1 Volt gegen eine Wasserstoffelektrode in gleicher Lösung. Ein Rekombinator 9 sorgt dafür, daß sich der an der Gegenelektrode 2 entwickelte Wasserstoff mittels eines Katalysators mit dem Sauerstoff der Luft verbindet.

Bei der in Fig. 2 dargestellten zweiten Ausführungsform wird die verunreinigte Luft durch ein Elektrolytvorratsgefäß 8 geleitet. Da die Schad-und Geruchsstoffe zumeist eine gewisse Löslichkeit zeigen, gehen diese Substanzen auf den Elektrolyten über, und die gereinigte Luft verläßt das Elektrolytvorratsgefäß 8. Zur Erzielung eines guten Wirkungsgrades ist es erforderlich, eine gewisse Verweilzeit der verunreinigten Luft im Elektrolyten und eine möglichst große Kontaktfläche zwischen den Luftblasen und dem Elektrolyten zu erzeugen. Dazu können in der Figur nicht dargestellte Maßnahmen dienen, wie zum Beispiel die Anordnung feinmaschiger Netze oder poröser Körper, welche die Bildung feiner, langsam im Elektrolyten emporsteigender Bläschen bewirken. Das Elektrolytvorratsgefäß 8 ist so mit dem Raum der Oxidationselektrode 1 verbunden, daß der Elektrolyt - am besten gegenläufig zum Luftstrom im Elektrolytvorratsgefäß 8 - zirkulieren kann. Dazu kann eine nicht näher dargestellte, die Zirkulation bewirkende Vorrichtung, angeordnet werden. Die Oxidationselektrode kann als Festbettelektrode oder als ein Stapel von Metallnetzen ausgebildet sein. An dieser Oxidationselektrode 1 werden die im Elektrolyten gelösten Schad-und Geruchsstoffe oxidiert. Bezüglich der Potentialverhältnisse, des Diaphragmas 5, der Gegenelektrode 2 und dem Rekombinator 9 gilt das zur ersten Ausführungsform Gesagte.

Bei der in Fig. 3 dargestellten dritten Ausführungsform sind beide Elektroden 1, 2 als Festbettelektroden ausgebildet, wobei die Gegenelektrode 2 partiell hydrophob ist. Das Diaphragma 5 verfügt über zwei Durchlässe 10 und 11, wobei eine nicht näher dargestellte Vorrichtung eine Zirkulation des Elektrolyten bewirkt. Von der Einlaßöffnung 3 strömt die verunreinigte Luft fein verteilt in die Gegenelektrode 2. Sie steigt gegen die Strömung des Elektrolyten nach oben, wobei sich die Geruchs-und Schadstoffe im Elektrolyten lösen. Gleichzeitig gibt diese Luft Sauerstoff an die 0,6 Volt - gegen eine Wasserstoffelektrode in gleicher Lösung - liegende Gegenelektrode 2 für die dort stattfindende Sauerstoffreduktion ab. Gereinigt verläßt die Luft die Auslaßöffnung 4. Der zirkulierende Elektrolyt befördert die Schad-und Geruchsstoffe zur Oxidationselektrode 1, an der sie oxidieren. Die Oxidationselektrode 1 kann auf 1,2 und 1,5 Volt gegen eine Wasserstoffelektrode in gleicher Lösung liegen, je nachdem, ob eine zusätzliche Sauerstoffentwicklung gewünscht wird oder nicht. Diese Ausführungsform mit der sauerstoffreduzierenden Gegenelektrode 2 hat den Vorteil, daß eine geringere Spannung im Gegensatz zu Zellen mit Wasserstoffentwicklung erforderlich ist.

Bei der in Fig. 4 dargestellten vierten Ausführungsform ist es möglich, die verbrauchte Luft in Räumen wieder mit Sauerstoff anzureichern. Bei dieser Ausführungsform wird die Gegenelektrode 2 als sauerstoffreduzierende, hydrophobe Gasdiffusionselektrode ausgebildet. Der Aufbau einer solchen Gasdiffusionselektrode ist aus "Technisches Messen", 50. Jahrgang 1983, Heft 11, Seite 401, zu entnehmen. Die Zelle wird so in die Außenwand 12 eines Raumes eingebaut, daß die Gegenelektrode 2 mit der Außenluft 13 in Berührung steht. Die 0,6 Volt gegen eine Wasserstoffelektrode in gleicher Lösung liegende Gegenelektrode 2 reduziert den Luftsauerstoff. An der Oxidationselektrode 1 wird neben der Oxidation der Schad-und Geruchsstoffe der Sauerstoff wieder freigesetzt, so daß die Luft gereinigt und mit Sauerstoff angereichert die Zelle wieder verläßt. Die bei der Sauerstofffreisetzung entstehenden Wasserstoffionen wandern durch das Diaphragma 5 zur Gegenelektrode 2 zurück. Der Oxidationselektrodenraum ist wie bei der ersten Ausführungsform ausgebildet, wobei die Oxidationselektrode auf einem Potential von 1,5 Volt gegen eine Wasserstoffelektrode in gleicher Lösung liegt.

Die Ausführungsformen zeigen beispielhaft Möglichkeiten der Gestaltung einer Vorrichtung zur Durchführung des Verfahrens nach einem der Ansprüche 1 bis 16, wobei sich aus weiteren Kombinationen der Ansprüche 1 bis 31 weitere Ausführungsformen ergeben.

## Ansprüche

1. Verfahren zur Konditionierung der Luft, **dadurch gekennzeichnet,** daß die anodisch umsetzbaren Stoffe in einer elektrochemischen Zelle oxidiert werden.

2. Verfahren nach Anspruch 1, **dadurch gekennzeichnet,** daß Schad-und Geruchsstoffe oxidiert werden.

3. Verfahren nach Anspruch 2, **dadurch gekennzeichnet,** daß Schad-und Geruchsstoffe der Luft von Räumen, die zum Aufenthalt von Menschen bestimmt sind, oxidiert werden.

4. Verfahren nach einem der Ansprüche 1 bis 3, **dadurch gekennzeichnet,** daß die mit Schad-und Geruchsstoffen verunreinigte Luft der Oxidationselektrode einer elektrochemischen Zelle zugeführt wird, die auf einem Potential von mindestens 1,2 V gegen eine Wasserstoffelektrode in gleicher Lösung liegt und daß die Luft in gereinigter Form die Zelle wieder verläßt.

5. Verfahren nach Anspruch 4, **dadurch gekennzeichnet,** daß die Verweilzeit der verunreinigten Luft an der Oxidationselektrode sowie die Größe der Kontaktfläche zwischen Luft und Elektrode so bemessen ist, daß die Geruchsstoffe nahezu vollständig umgesetzt werden.

6. Verfahren nach einem der Ansprüche 1 bis 3,

**dadurch gekennzeichnet,**

daß die mit Schad-und Geruchsstoffen verunreinigte Luft durch einen Elektrolyten geleitet wird und der Elektrolyt der Oxidationselektrode einer elektrochemischen Zelle zugeführt wird, die auf einem Potential von mindestens 1,2 V gegen eine Wasserstoffelektrode in gleicher Lösung liegt.

7. Verfahren nach Anspruch 6,

**dadurch gekennzeichnet,**

daß die Verweilzeit der verunreinigten Luft im Elektrolyten sowie das Ausmaß der Kontaktfläche zwischen Luftbläschen und Elektrolyt so bemessen ist, daß die Schad-und Geruchsstoffe nahezu vollständig an den Elektrolyten abgegeben werden.

8. Verfahren nach einem der Ansprüche 1 bis 7,

**dadurch gekennzeichnet,**

daß eine zusätzliche Sauerstoffentwicklung an der Oxidationselektrode bewirkt wird, indem diese auf einem Potential von mindestens 1,5 V gegen eine Wasserstoffelektrode in gleicher Lösung liegt.

9. Verfahren nach einem der Ansprüche 1 bis 8,

**dadurch gekennzeichnet,**

daß die Gegenreaktion an der Gegenelektrode die Wasserstoffentwicklung ist, indem diese auf einem Potential von ca. - 0,1 V gegen eine Wasserstoffelektrode in gleicher Lösung liegt.

10. Verfahren nach einem der Ansprüche 1 bis 8,

**dadurch gekennzeichnet,**

daß die Gegenreaktion an der Gegenelektrode die Sauerstoffreduktion ist, indem der Gegenelektrode Sauerstoff zugeführt wird und sie auf einem Potential von ca. 0,6 V gegen eine Wasserstoffelektrode in gleicher Lösung liegt.

11. Verfahren nach Anspruch 10,

**dadurch gekennzeichnet,**

daß der Gegenelektrode Außenluft zugeführt wird.

12. Verfahren nach einem der Ansprüche 1 bis 7 und Anspruch 9,

**dadurch gekennzeichnet ,**

daß die Zellspannung 1,3 V beträgt.

13. Verfahren nach Anspruch 8 und 9,

**dadurch gekennzeichnet,**

daß die Zellspannung 1,6 V bis 1,7 V beträgt.

14. Verfahren nach einem der Ansprüche 1 bis 7 und Anspruch 10 oder 11,

**dadurch gekennzeichnet,**

daß die Zellspannung 0,6 V bis 0,7 V beträgt.

15. Verfahren nach den Ansprüchen 8 und 10 oder 11,

**dadurch gekennzeichnet,**

daß die Zellspannung 0,9 V bis 1,0 V beträgt.

16. Verfahren nach einem der Ansprüche 1 bis 5 oder 8 bis 15,

**dadurch gekennzeichnet,**

daß die verunreinigte Luft durch eine partiell hydrophobe Festbettelektrode geleitet wird.

17. Elektrochemische Zelle zur Durchführung des Verfahrens nach einem der Ansprüche 1 bis 16 mit einer Oxidationselektrode (1) und einer Gegenelektrode (2), die mit einem Elektrolyten in Kontakt stehen,

**dadurch gekennzeichnet,**

daß die Zelle eine Einlaßöffnung (3) für verunreinigte Luft und eine Auslaßöffnung (4) für gereinigte Luft aufweist und daß die Elektrolyträume der beiden Elektroden (1, 2) durch ein Diaphragma (5) getrennt sind.

18. Elektrochemische Zelle nach Anspruch 17,

**dadurch gekennzeichnet,**

daß der Elektrolyt Phosphorsäure ist.

19. Elektrochemische Zelle nach Anspruch 17,

**dadurch gekennzeichnet,**

daß der Elektrolyt Kalilauge ist.

20. Elektrochemische Zelle nach Anspruch 17,

**dadurch gekennzeichnet,**

daß der Elektrolyt ein Gleichgewichtselektrolyt ist.

21. Elektrochemische Zelle nach Anspruch 20,

**dadurch gekennzeichnet,**

daß der Gleichgewichtselektrolyt Carbonat oder Bicarbonat ist.

22. Elektrochemische Zelle nach einem der Ansprüche 17 bis 21 zur Durchführung des Verfahrens nach Anspruch 16,

**dadurch gekennzeichnet,**

daß die Oxidationselektrode (1) als partiell hydrophobe Festbettelektrode ausgebildet ist.

23. Elektrochemische Zelle nach einem der Ansprüche 17 bis 22 zur Durchführung des Verfahrens nach Anspruch 16,

**dadurch gekennzeichnet,**

daß die Gegenelektrode (2) als partiell hydrophobe Festbettelektrode ausgebildet ist.

24. Elektrochemische Zelle nach einem der Ansprüche 17 bis 23 zur Durchführung des Verfahrens nach Anspruch 16,

**dadurch gekennzeichnet,**

daß die partiell hydrophobe Festbettelektrode aus einer Schüttung von porösen, leitfähigen Partikeln besteht.

25. Elektrochemische Zelle nach einem der Ansprüche 17 bis 24 zur Durchführung des Verfahrens nach Anspruch 16,

**dadurch gekennzeichnet,**

daß die Schüttung durch Pressung eine bessere elektrische Leitfähigkeit aufweist.

26. Elektrochemische Zelle nach einem der Ansprüche 17 bis 22, 24 oder 25, zur Durchführung des Verfahrens nach einem der Ansprüche 1 bis 3, 7 bis 9, 12 oder 13 und Anspruch 6,

**dadurch gekennzeichnet,**
daß die verunreinigte Luft ein Elektrolytvorratsgefäß (8) durchströmt und daß das Elektrolytvorratsgefäß so mit dem Elektrolytraum der Oxidationselektrode (1) verbunden ist, daß der Elektrolyt zwischen dem Elektrolytvorratsgefäß (8) und dem Elektrolytraum der Oxidationselektrode (1) zirkuliert, was durch die Einleitung der verunreinigten Luft oder eine Umwälzvorrichtung bewirkt ist.

27. Elektrochemische Zelle nach Anspruch 26, **dadurch gekennzeichnet,** daß die Oxidationselektrode (1) als ein Stapel von Metallnetzen ausgebildet ist.

28. Elektrochemische Zelle nach einem der Ansprüche 17 bis 22 oder 24 bis 27 zur Durchführung des Verfahrens nach einem der Ansprüche 1 bis 9, 12, 13 oder 16, **dadurch gekennzeichnet,** daß dem Elektrolytraum der Gegenelektrode (2) ein Rekombinator (9) zugeordnet ist, der mittels eines Katalysators die Verbindung des Wasserstoffs mit Sauerstoff bewirkt.

29. Elektrochemische Zelle nach einem der Ansprüche 17 bis 21 oder 24 bis 25 und nach den Ansprüchen 22 und 23 zur Durchführung des Verfahrens nach den Ansprüchen 1, 2 und 8 oder 1, 2 und 8 mit einem der Ansprüche 2 bis 5, 8 oder 14 bis 16, **dadurch gekennzeichnet,** daß das Diaphragma (5) am Boden und an der Decke der Zelle Durchbrüche (10, 11) aufweist, daß die Oxidationselektrode (1) eine Festbettelektrode ist und daß der Elektrolyt in einem Kreislauf durch die Elektrolyträume beider Elektroden zirkuliert, was durch eine Umwälzvorrichtung bewirkt ist.

30. Elektrochemische Zelle nach einem der Ansprüche 17 bis 22 oder 24 bis 25 zur Durchführung des Verfahrens nach einem der Ansprüche 1 bis 5, 8, 11 oder 14 bis 16 und Anspruch 10, **dadurch gekennzeichnet,** daß die Gegenelektrode (2) eine hydrophobe Gasdiffusionselektrode ist.

31. Elektrochemische Zelle nach Anspruch 30, **dadurch gekennzeichnet,** daß die Zelle so in einen Durchbruch einer Außenwand (12) eines Raumes eingebaut wird, daß die Gasdiffusionselektrode mit der Außenluft in Kontakt ist.

# FIG.1

# FIG.2

FIG.3

FIG.4

F 86/32